Europäisches Patentamt

European Patent Office

Office européen des brevets

(11) Numéro de publication : **0 411 178 B1**

(12) **FASCICULE DE BREVET EUROPEEN**

(45) Date de publication du fascicule du brevet :
07.10.92 Bulletin 92/41

(51) Int. Cl.⁵ : **A23L 1/314,** A23B 4/00,
A23L 3/22, A23K 1/18,
A23L 1/325

(21) Numéro de dépôt : **89114193.9**

(22) Date de dépôt : **01.08.89**

(54) **Procédé de préparation d'un produit cuit à conservation prolongée à base de protéine animale.**

(43) Date de publication de la demande :
06.02.91 Bulletin 91/06

(45) Mention de la délivrance du brevet :
07.10.92 Bulletin 92/41

(84) Etats contractants désignés :
AT BE CH DE ES FR GB GR IT LI LU NL SE

(56) Documents cités :
EP-A- 0 290 251
GB-A- 681 052
GB-A- 1 521 003
GB-A- 2 141 917
US-A- 4 113 890

(56) Documents cités :
JOURNAL OF FOOD SCIENCE, vol. 48, 1983,
pages 1-5; L. WALLINGFORD: "Evaluation of
the water binding properties of foodhydrocolloids by physical/chemical methods and in a
low fat meat emulsion"

(73) Titulaire : **SOCIETE DES PRODUITS NESTLE
S.A.**
**Service des Brevets Case postale 353
CH-1800 Vevey (CH)**

(72) Inventeur : **Cadet, Michel**
**131, rue de la Libération
F-60 530 Le Mesnil en Thelle (FR)**
Inventeur : **Prost, Jean**
**939 Ch. des Solons
F-60 650 Ons En Bray (FR)**

## Description

L'invention se rapporte à la fabrication d'un produit de viande ou de poisson cuit à conservation prolongée. La viande comme le poisson peuvent se présenter sous forme de morceaux cuits et secs destinés à être réhydratés. Ces produits sont généralement de qualité organoleptique et bactériologique moyenne voire médiocre. Traditionnellement ils sont soumis à une cuisson - stérilisation par charge, dans des autoclaves à double enveloppe, où la viande par exemple est disposée à l'état surgelé avec une certaine quantité d'eau. Cette opération nécessite un temps assez long, de l'ordre de 1h30 min. à haute température, de l'ordre de 120°C, ce qui conduit à une détérioration de leur texture par surcuisson. A la réhydratation, par cuisson dans l'eau bouillante par exemple, ils sont durs et ont une mauvaise tenue.

De plus, dans le traitement discontinu dans des autoclaves avec chauffage direct ou indirect sans agitation, les transferts thermiques sont longs et hétérogènes ce qui entraîne, outre une médiocre productivité et les inconvénients qualitatifs organoleptiques mentionnés précédemment, une mauvaise maîtrise de la température et de la durée de stérilisation.

On connaît un procédé de stérilisation rapide et en continu de la viande. Selon EP 72,322 par exemple, on broie de la viande et on soumet le broyat à une hydrolyse acide ou enzymatique puis on le stérilise thermiquement. Dans ce procédé connu, la stérilisation en continu ne peut être réalisée qu'après fluidisation de la protéine animale par hydrolyse. Une telle hydrolyse, outre le traitement supplémentaire qu'elle nécessite, n'est en général pas souhaitée dans un produit destiné à l'alimentation humaine où l'on désire préserver dans la mesure du possible l'intégrité de la protéine animale pour des raisons organoleptiques.

La présente invention a pour but de remédier aux inconvénients des procédés connus.

Elle concerne un procédé de préparation d'un produit cuit à conservation prolongée à base de protéine animale dans lequel on cuit et on stérilise de la viande ou du poisson, caractérisé par le fait que la cuisson-stérilisation a lieu en continu dans un échangeur à surface raclée en présence d'un agent technologique choisi parmi les gommes végétales et la carboxyméthylcellulose.

Par protéine animale selon l'invention, on entend les viandes, par exemple de volaille, en particulier de poule, de poulet, de boeuf, de mouton, de veau, de porc, de lapin, et les poissons, par exemple le cabillaud, la morue, le colin.

La matière première mise en oeuvre peut être fraîche ou congelée, pour la viande avec ou sans os, par exemple avec os dans le cas des volailles, ce qui nécessite un désossage mécanique. Le poisson, par exemple la morue peut être salée, auquel cas elle doit être réhydratée avant la cuisson.

Si elle se présente à l'état congelé avec os, par exemple pour la volaille, il faut tout d'abord la décongeler par exemple par charge en chambre avec régulation de température ou en continu par exemple en tunnel à air chaud ou à micro-ondes. Le désossage doit intervenir à 0-2°C. On peut traiter des morceaux de 0,8 mm à 2 cm.

Il est préférable d'utiliser des morceaux assez réguliers, par exemple de 5 à 13 mm pour la viande surgelée ou de 5 à 20 mm pour la viande à -1 -0°C obtenus par broyage.

L'agent technologique a pour but de retenir l'eau de constitution de la matière première dont l'humidité doit être supérieure à 50% et de faciliter le transfert vers le cuiseur-stérilisateur ainsi que de rendre possible l'opération de cuisson-stérilisation à température > 100°C. Il est nécessaire qu'il soit soluble dans l'eau, épaississant, gonflant et rétenteur d'humidité. A cet égard les gommes végétales, en particulier de guar, de caroube, xanthane et la carboxyméthylcellulose conviennent car elles favorisent la rétention d'eau de constitution en particulier pendant la cuisson. On utilise 0,3 à 5% et de préférence 0,5 à 0,7% d'agent technologique, par rapport au poids de la matière première mise en oeuvre que l'on mélange à la matière première par exemple à l'aide d'une pompe à double vis de gavage munie d'une trémie de réception.

Le mélange est ensuite repris par une pompe positive qui sert à réguler l'alimentation d'un préchauffeur portant le mélange à une température inférieure ou égale à 70°C, qui peut être un échangeur de chaleur tubulaire ou en variante un échangeur à surface raclée, puis conduit dans le cuiseur à surface raclée. Dans ce dernier cas, l'étape de préchauffage peut être omise.

Le cuiseur comporte une enveloppe cylindrique à double paroi constituant le stator chauffée par la vapeur à une pression d'au plus 8 bar, dans laquelle tourne un rotor portant des lames raclant en permanence le produit se trouvant sur la paroi du cylindre conduisant à l'obtention d'un produit homogène. Les avantages de ce type de cuiseur sont la possibilité d'un traitement en continu, la constance et la qualité du produit traité liée au fait que l'opération s'effectue dans un système entièrement fermé à l'abri de toute contamination par l'air. De plus, l'absence d'évaporation assure un transfert thermique uniforme et un rendement élevé et le mélange homogène donne des caractéristiques constantes de texture, arôme, goût et couleur au produit pendant une longue durée. Il n'y a pas d'eau à ajouter et de ce fait le produit cuit à l'étuvée dans son propre jus.

L'échangeur à surface raclée doit autoriser une veine de produit suffisante entre le stator et le rotor. C'est ainsi que, lorsque le produit à traiter contient des morceaux, l'espace annulaire entre le rotor et le stator est supérieur à la dimension des morceaux pour éviter le blocage. Il représente de préférence 19 à 38 mm et la limite supérieure de cette plage est préférée pour le traitement des viandes contenant des morceaux.

La stérilisation proprement dite peut avoir lieu dans un chambreur tubulaire calorifugé ou dans un échangeur à surface raclée en contrôlant la température du produit de 125 à 140°C et la durée du maintien à cette température, de 5 à 240 s, de préférence à environ 130°C pendant environ 1 min., pour obtenir la valeur stérilisatrice désirée.

Après cette opération, le produit est refroidi entre 80 et 95°C, par exemple dans un échangeur tubulaire ou en variante dans un échangeur à surface raclée, puis repris par une pompe positive d'extraction ayant le même débit que la pompe positive d'alimentation. Le refroidissement peut être complété au moyen d'un second échangeur tubulaire en aval de la pompe d'extraction. Avantageusement, la pompe d'extraction assure en régime dynamique une contre pression de 1,7 à 2,3 bar. Dans la variante où le refroidissement est assuré par un échangeur à surface raclée en amont de la pompe d'extraction, un tube de détente pourrait remplacer le second refroidisseur.

Suivant le refroidissement, le produit est conduit vers une presse mono- ou de préférence bi-vis équipée d'un système de chauffage par vapeur fluante (à pression atmosphérique) permettant une meilleure séparation de la phase liquide, constituée principalement par la matière grasse. Le chauffage sert également à maintenir la viande ou le poisson à une température supérieure à 70°C pour conserver une bonne qualité bactériologique. A ce stade, la viande ou le poisson pressé peut être utilisé pour préparer par hydrolyse enzymatique un aliment destiné à l'alimentation entérale.

Dans une variante d'utilisation conduisant à la préparation de viande déshydratée, on sèche la viande cuite et pressée. On peut traiter le jus de cuisson par séparation centrifuge de manière à en extraire la matière grasse, concentrer le cas échéant le jus aqueux, par exemple sous vide et le réintroduire dans la viande, éventuellement après un traitement thermique renforçant son goût. On peut ajouter à la viande des aromates et des agents de texturation, par exemple un isolat de protéines de soja, du gluten de blé dévitalisé, de la farine de blé précuite et granuler ou former le mélange.

La viande peut être séchée sur une bande métallique perforée chauffée par circulation d'air ou dans un tunnel à micro-ondes sous vide ou encore sur cylindre. On peut enfin ajouter la matière grasse, de préférence stabilisée par addition d'un antioxydant, par exemple par pulvérisation.

Bien entendu, le procédé selon l'invention peut être appliqué à la préparation de produits déshydratés ou non destinés à l'alimentation des animaux familiers.

Les exemples ci-après illustrent l'invention. Dans ceux-ci les parties et pourcentages sont en poids, sauf indication contraire.

Exemple 1

On broie de la viande congelée à -20°C constituée de 30% de poules de 1,2-1,3 kg éviscérées sans les pattes et les bouts des ailerons et de 70% de cous (ces viandes sont en variante traitées sans coupage) dans un broyeur muni d'une grille à trous de 5mm de diamètre. A la sortie du broyeur, la température de la masse est 0°C. On la passe dans une désosseuse, puis on alimente la viande désossée par une trémie dans une malaxeuse à double vis de gavage dans laquelle on ajoute 0,5%, calculé sur le poids de la viande désossée, d'un agent technologique constitué de gomme de guar à 81% de galactomannane. La viande désossée a 20% de matière sèche non grasse et 16,6% de matière grasse. Le malaxage dure 3 à 5 min. Le mélange est repris par une pompe à deux pignons à 5 lobes, à un débit de 100 kg/h, puis passe dans un échangeur tubulaire à double enveloppe chauffé par de l'eau chaude à 70°C où il réside 3 min. La masse sortant de l'échangeur tubulaire est à 57°C. Après ce préchauffage, la masse subit une cuisson en passant dans un échangeur à surface raclée muni d'une double enveloppe contenant de la vapeur à 3,3 bar, pendant 4 min. de sorte que la température de la masse quittant l'échangeur à surface raclée est 132°C. La distance entre le rotor et le stator dans l'échangeur à surface raclée est 38 mm. A la sortie de l'échangeur à surface raclée, la masse est stérilisée dans un chambreur tubulaire calorifugé dans lequel elle est maintenue à 132°C pendant 41 s. La masse passe ensuite dans un refroidisseur tubulaire à circulation d'eau froide à 11°C où elle est refroidie à 109°C en 23 s., puis elle est reprise par une pompe à 2 pignons à 5 lobes dont le rôle est de maintenir une pression dans le chambreur permettant la stérilisation et d'extraire la masse.

Le débit de la pompe d'extraction est identique à celui de la pompe d'alimentation. La masse est alors conduite dans un échangeur tubulaire à double enveloppe à circulation d'eau à 11°C qui la refroidit à 88°C en 50 s. La masse est ensuite conduite dans une presse à double vis dont la grille de sortie à des trous de 0,6mm de manière à en extraire l'essentiel de la matière grasse et du jus de cuisson.

Les vis tournent à 2 t/min et le rapport de compression est 1/7. On obtient ainsi 48,6% de viande cuite à 32,39% de matière sèche non grasse et à 4,55% de matière grasse et 51,4% de jus à 5,17% de protéines et à 35,95% de matière grasse.

Les analyses microbiologiques (double échantillonnage) de la viande crue désossée, de la viande cuite et de la viande cuite et pressée sont indiquées dans le tableau 1 ci-après, exprimées en nombres de germes/g:

## TABLEAU 1

| Etat de la viande | Germes totaux | Coliformes fécaux | Coliformes | E.Coli | Staphylocoques | Clostridium | Levures moisissures |
|---|---|---|---|---|---|---|---|
| Crue désossée mécaniquement | $0,44.10^6$ $13.10^6$ | 1100 1100 | 20 1100 | 20 1100 | 0 0 | 3 45 | 0/0 0/0 |
| Après cuisson | 30 10 | 2,3 0,3 | 0,4 0,3 | 0,4 0,3 | 0 0 | 0 0 | 0/0 0/0 |
| Après cuisson et pressage | 140 80 | 0,4 2,3 | 0,3 0,3 | 0,3 0,3 | 0 0 | 0 0 | 0/0 0/0 |

On constate que le procédé permet d'obtenir la stérilité pratique avec une réduction considérable des germes totaux et l'élimination des pathogènes.

Exemple 2

On procède comme à l'exemple 1 en utilisant différents agents technologiques à une concentration de 0,5% par rapport à la viande désossée et on observe quelle est l'influence de l'agent technologique sur la pression d'alimentation du produit relevée entre la pompe d'alimentation et le préchauffeur et sur le fonctionnement de l'échangeur à surface raclée (cuiseur).

Les résultats sont indiqués dans le tableau 2 ci-après:

TABLEAU 2

| Agent technologique | Pression entre l'alimentation et le préchauffage (bar) | Remarques |
|---|---|---|
| Gomme de guar | 4,2 | Bon transfert.Aucun problème dans le cuiseur |
| Gomme de caroube | 5,1 | " " " |
| Gomme de xanthane | 5,5 | " " " |
| Carboxyméthyl-cellulose | 5,8 | " " " |

Le tableau 3 ci-après indique la composition de la viande cuite et pressée, du jus de pressage et les rendements du traitement:

5

TABLEAU 3

| Agent techno-logique | Composition de la viande cuite et pressée | | Composition du jus de pressage | | Taux d'extrac-tion de jus par rapport à la viande cuite |
|---|---|---|---|---|---|
| | matière sèche non grasse % | matière grasse % | matière sèche non grasse % | matière grasse % | % |
| Gomme de guar | 32,39 | 4,55 | 5,17 | 35,95 | 51,4 |
| Gomme de caroube | 41,27 | 4 | 13,31 | 29,25 | 61,4 |
| Gomme de xanthane | 32,5 | 4,4 | 4,41 | 31,48 | 56,4 |
| Carboxyméthyl-cellulose | 32,88 | 6,1 | 5,14 | 27,15 | 50 |

SUITE DU TABLEAU 3

| Agent technologique | Rendement = viande cuite pressée + jus/ viande crue % | Rendement de l'extraction de la graisse = graisse séparée au pressage/graisse totale % |
|---|---|---|
| Gomme de guar | 84,7 | 88,15 |
| Gomme de caroube | 96,18 | 87,19 |
| Gomme xanthane | 71,8 | 71,4 |
| Carboxyméthyl-cellulose | 75,3 | 62 |

Exemple comparatif

A titre de comparaison, on a utilisé d'autres agents technologiques à une concentration, à une température de la viande à l'alimentation et à un débit d'alimentation conduisant à des propriétés épaississante, liante et rétentrice d'eau comparables à celle des agents du tableau 2 précédent et en principe compatibles avec la cuisson à température supérieure à 100°C dans un échangeur à surface raclée.

Les résultats sont indiqués dans le tableau 4 ci-après:

## TABLEAU 4

| Agent technolo- gique | Concentra- tion % | Température de la viande à l'alimen- tion (°C) | Débit d'ali- menta- tion (kg/h) | Pression entre l'alimen- tation et le préchauf- fage (bar) | Remarques |
|---|---|---|---|---|---|
| Alginate | 0,5 | 0 | 60 | 7,5 | Difficulté à pomper la viande. A la limite du blo- cage dans le cuiseur |
| Carraghé- nate | 0,5 | 0 | 56 | 8,2 | Difficulté à pomper la viande. Blocage du cuiseur après 20 min. de fonctionnement |
| Isolat de protéine de soja | 11 | 8 | 60 | 8 | Difficulté à pomper la viande. A la limite du blocage dans le cuiseur. |
| Caséinate de sodium | 11 | 12 | 36 | 9,5 | Difficulté à pomper la viande. A la limite du blocage dans le cuiseur. |

On constate que les agents technologiques épaississants alginate, carraghénate et protéines animale ou végétale ne conviennent pas à la cuisson-stérilisation de la viande dans un échangeur à surface raclée.

Exemple 3

Dans les conditions de l'exemple 1, on obtient de la viande de poulet cuite et pressée à 40,7% de matière sèche dont 2,7% de matière grasse à partir de poulets entiers éviscérés et débarrassés des pattes et du bout des ailerons.

Exemple 4

On traite de la viande de boeuf constituée de caparaçon dans les conditions de l'exemple 1. La viande cuite et pressée a 33,5% de matière sèche dont 3,4% de matière grasse.

Exemple 5

On prépare 1005 kg de viande cuite selon l'exemple 1. Après pressage, on obtient 570 kg de viande pressée. On récupère le jus sortant de la presse dans une cuve tampon à double enveloppe à 90°C, puis on le pompe dans une séparatrice centrifuge qui fournit deux phases liquides et une phase solide. La phase solide de 26 kg a 30% de matière sèche et 2% de matière grasse. Une phase liquide de 276 kg constitue le jus clarifié à 7% de matière sèche. L'autre phase liquide de 129 kg est la matière grasse raffinée. Après récupération, on stabilise rapidement la matière grasse en y ajoutant un antioxydant du romarin à raison de 500ppm (parties par million). On concentre le jus clarifié dans un évaporateur à plaques à 80-85°C sous un vide de 0,9 bar (680mmHg), jusqu'à ce qu'il ait 40% de matière sèche. On ajoute alors à la viande pressée 83 kg de sel, 12 kg de blanc d'oeuf en poudre, 45 kg du jus concentré précédent et les 26 kg de la phase solide précédente dans un mélangeur à double ruban et on mélange pendant 2 à 3 min. On fait ensuite passer ce mélange en couche de 25 mm d'épaisseur sur une bande transporteuse métallique perforée chauffée à 100°C par de l'air où il est préséché en 9 min. jusqu'à 70-73% de matière sèche, puis on granule le mélange au moyen d'une vis d'extrusion munie d'une grille à trous de 3 ou 5 mm de diamètre selon les dimensions des granulés de viande souhaitées.

Les granulés subissent un séchage final en couche de 25 mm sur une bande métallique perforée chauffée à 76°C par circulation d'air pendant 9 min. Les granulés après séchage ont 96,5% de matière sèche. On pulvérise sur ceux-ci 91 kg de la matière grasse stabilisée précédente à 35°C et on obtient 459 kg de viande de poule granulée que l'on met en sacs de polyéthylène doublés de papier kraft.

Lors de l'utilisation, 10 g de ces granulés sont réhydratés en les plaçant dans 250 g d'eau froide, en portant à l'ébullition puis en les maintenant 5 min. dans l'eau à l'ébullition. Les granulés ne présentent aucun défaut après 2 mois à 37°C.

Exemple 6

On procède comme à l'exemple 5 à partir de viande de boeuf. On obtient ainsi 530 kg de viande cuite pressée et, après centrifugation du jus sortant de la presse, 145 kg de phase solide, 150 kg de jus clarifié et 145 kg de matière grasse. On ajoute à la viande pressée 180 kg de protéines de soja à 32,6% de protéines (correspondant à 93% de protéines sur matière sèche) et 105 kg d'ingrédients constitués de sel, de blanc d'oeuf, d'oignon, d'épices et du jus clarifié préalablement concentré à 40%. Après préséchage, granulation et séchage final, on pulvérise 22 kg de la matière grasse sur les granulés et on obtient 340 kg de viande de boeuf contenant 48,5% de protéines de viande, 22,9% de protéines de soja et 7,9% de matière grasse. La réhydratation s'opère en versant de l'eau à 90°C dans un gobelet où on a placé 10 g de granulés et en laissant 5 min. avec un couvercle.

Les granulés se conservent sans modification pendant 3 mois à 30°C.

Exemple 7

On procède comme à l'exemple 6 à partir de 1000 kg d'un mélange de 90% de viande de boeuf pour 10% de viande de mouton. On obtient 349 kg de viande séchée du type merguez (aromatisées avec les épices nécessaires) contenant 45,3% de protéines de viande, 18,15% de protéines de soja et 6,3% de matière grasse. Cette viande est ensuite mise sous forme de rondelles de 15mm de diamètre dans une formeuse.

Exemple 8

On prépare selon l'exemple 6 de la viande de boeuf cuite et pressée. Celle-ci qui contenait à l'état cru 70 mg de sodium par 100 g ne contient plus que 50 mg/100 g après la cuisson et le pressage. On congèle la viande dégraissée et partiellement désodée en vue d'une utilisation ultérieure. Lors du traitement ultérieur, on hache 208 kg de la viande congelée dans un broyeur muni d'une grille à trous de 3 mm. puis on la transfère par une vis élévatrice dans une cuve de 400 l munie d'un agitateur. On y ajoute 190 kg d'eau à 60°C sous agitation de sorte que la température finale du mélange soit 20°C. On incorpore ensuite au mélange 0,17 kg de protéase d'Aspergillus oryzae (Fungal protease MKC 31000 ou Koji) sous agitation et on maintient la température à 20°C pendant 2h30 min., puis on stoppe l'hydrolyse enzymatique en chauffant à 90°C par injection de vapeur. Après arrêt de l'hydrolyse enzymatique, la viande passe successivement dans un broyeur à couteaux (grilles à trous de 0,1-0,2 mm), puis dans un broyeur colloïdal. On conditionne ensuite le produit en boîtes de 400 g que l'on sertit puis stérilise dans un autoclave statique pendant 75 min. à 121°C. Le produit obtenu convient parfaitement à l'alimentation entérale.

## Revendications

1. Procédé de préparation d'un produit cuit à conservation prolongée à base de protéine animale dans lequel on cuit et on stérilise de la viande ou du poisson, caractérisé par le fait que la cuisson-stérilisation a lieu en continu dans un échangeur à surface raclée en présence d'un agent technologique choisi parmi les gommes végétales et la carboxyméthylcellulose.

2. Procédé selon la revendication 1, caractérisé par le fait que l'on préchauffe la viande ou le poisson broyé à une température inférieure ou égale à 70°C, puis on le porte à une température de 125-140°C et on le maintient à cette température pendant 5 à 240 s. en présence de 0,3 à 5% d'agent technologique.

3. Procédé selon la revendication 1, caractérisé par le fait que l'agent technologique est choisi parmi la gomme de guar, la gomme xanthane, la gomme de caroube et la carboxyméthylcellulose.

4. Procédé selon la revendication 1, caractérisé par le fait qu'avant la cuisson-stérilisation, on préchauffe la viande ou le poisson dans un échangeur de chaleur tubulaire et qu'après la cuisson-stérilisation, on le refroidit dans un échangeur de chaleur tubulaire.

5. Procédé selon la revendication 1, caractérisé par le fait que l'on dirige la viande ou le poisson vers l'échangeur de préchauffage au moyen d'une pompe positive d'alimentation et qu'on l'extrait après le refroidissement au moyen d'une pompe positive d'extraction de même débit que la pompe d'alimentation, ladite pompe positive d'extraction assurant en régime dynamique une contrepression de 1,7 à 2,3 bar.

6. Procédé selon la revendication 1, caractérisé par le fait que la matière première a une teneur en humidité supérieure à 50%.

7. Procédé selon la revendication 1, caractérisé par le fait que la distance entre le rotor et le stator de l'échangeur à surface raclée de cuisson-stérilisation est 19 à 38 mm, et de préférence environ 38 mm dans le cas du traitement de viande en morceaux.

8. Procédé selon la revendication 1, caractérisé par le fait que le préchauffage, la cuisson-stérilisation et le refroidissement ont lieu dans des échangeurs à surface raclée montés en série.

9. Procédé selon la revendication 1, caractérisé par le fait que l'on sépare la viande ou le poisson du jus de cuisson par pressage.

10. Procédé selon la revendication 9, destiné à préparer de la viande déshydratée, caractérisé par le fait que l'on sèche la viande cuite, que l'on dégraisse le jus de cuisson, que l'on concentre le jus dégraissé, que l'on incorpore le jus concentré à la viande et que l'on pulvérise le cas échéant la matière grasse sur la viande séchée.

11. Utilisation du produit obtenu par le procédé selon l'une des revendications 1 à 10 dans des produits culinaires ou des produits pour animaux familiers.

12. Utilisation du produit obtenu par le procédé selon l'une des revendications 1 à 9 pour préparer par hydrolyse enzymatique un aliment destiné à l'administration entérale.

EP 0 411 178 B1

**Patentansprüche**

1. Verfahren zur Herstellung eines Kochproduktes mit verlängerter Konservierung auf der Basis von Tierproteinen, bei welchem man Fleisch oder Fisch kocht und sterilisiert, dadurch gekennzeichnet, daß die Kochsterilisation in einem Dünnschicht-Wärmeaustauscher in Gegenwart eines Verfahrensmittels, das aus pflanzlichen Gummen und Carboxymethylzellulose ausgewählt ist, kontinuierlich durchgeführt wird.

2. Verfahren nach Anspruch 1, dadurch gekennzeichnet, daß man das zerkleinerte Fleisch oder den zerkleinerten Fisch auf eine Temperatur von unter oder gleich 70° C vorwärmt, und daß man dasselbe bzw. denselben dann auf eine Temperatur von 125 bis 140° C bringt und auf dieser Temperatur von 5 bis 240 s in Gegenwart von 0,3 bis 5 % des Verfahrensmittels hält.

3. Verfahren nach Anspruch 1, dadurch gekennzeichnet, daß das Verfahrensmittel aus Guargummi, Xanthangummi, Johannisbrotgummi und Carboxymethylzellulose ausgewählt ist.

4. Verfahren nach Anspruch 1, dadurch gekennzeichnet, daß man das Fleisch oder den Fisch vor der Koch-Sterilisation in einem Röhrenwärmeaustauscher vorwärmt, und daß man dasselbe bzw. denselben nach der Koch-Sterilisation in einem Röhrenwärmeaustauscher abkühlt.

5. Verfahren nach Anspruch 1, dadurch gekennzeichnet, daß man das Fleisch oder den Fisch zu dem Vorwärmungs-Wärmeaustauscher mit Hilfe einer positiven Speisepumpe und daß man dasselbe bzw. denselben nach dem Abkühlen mit Hilfe einer positiven Abzugspumpe von gleicher Förderleistung wie die Speisepumpe abzieht, wobei diese positive Abzugspumpe dynamisch einen Gegendruck von 1,7 bis 2,3 bar gewährleistet.

6. Verfahren nach Anspruch 1, dadurch gekennzeichnet, daß das Ausgangsmaterial einen Feuchtigkeitsgehalt von mehr als 50 % aufweist.

7. Verfahren nach Anspruch 1, dadurch gekennzeichnet, daß der Abstand zwischen dem Rotor und dem Stator des für die Koch-Sterilisation verwendeten Dünnschicht-Wärmeaustauschers 19 bis 38 mm, und vorzugsweise etwa 38 mm für den Fall der Behandlung von Fleischstücken beträgt.

8. Verfahren nach Anspruch 1, dadurch gekennzeichnet, daß das Vorwärmen, die Koch-Sterilisation und das Abkühlen in in Reihe angeordneten Dünnschicht-Wärmeaustauchen stattfinden.

9. Verfahren nach Anspruch 1, dadurch gekennzeichnet, daß man das Fleisch oder den Fisch von dem Kochsaft durch Pressen abtrennt.

10. Verfahren nach Anspruch 9, welches zur Herstellung von dehydratisiertem Fleisch bestimmt ist, dadurch gekennzeichnet, daß man das gekochte Fleisch trocknet, daß man den Kochsaft entfettet, daß man den entfetteten Saft konzentriert, daß man den konzentrierten Saft dem Fleisch einverleibt, und daß man gegebenenfalls das Fett auf das getrocknete Fleisch aufsprüht.

11. Verwendung des nach dem Verfahren gemäß einem der Ansprüche 1 bis 10 erhaltenen Produktes in Eßwaren oder in Produkten für Haustiere.

12. Verwendung des nach dem Verfahren gemäß einem der Ansprüche 1 bis 9 erhaltenen Produktes zur Herstellung eines für die enterale Verabreichung bestimmten Lebensmittels durch enzymatische Hydrolyse.

**Claims**

1. A process for the preparation of a cooked product based on animal protein having a long storage life, in which meat or fish is cooked and sterilized, characterized in that cooking/sterilization is carried out continuously in a scraped surface heat exchanger in the presence of a technological agent selected from vegetable gums and carboxymethyl cellulose.

2. A process as claimed in claim 1, characterized in that the ground meat or fish is preheated to a temperature below or equal to 70°C, subsequently brought to a temperature of 125 to 140°C and kept at that temperature for 5 to 240 s in the presence of 0.3 to 5% technological agent.

11

3. A process as claimed in claim 1, characterized in that the technological agent is selected from guar gum, xanthan gum, carob gum and carboxymethyl cellulose.

4. A process as claimed in claim 1, characterized in that, before cooking/sterilization, the meat or fish is preheated in a tube heat exchanger and, after cooking/sterilization, is cooled in a tube heat exchanger.

5. A process as claimed in claim 1, characterized in that the meat or fish is delivered to the preheating heat exchanger by a positive feed pump and, after cooling, is removed by a positive extraction pump having the same output as the feed pump, the positive extraction pump operating at a dynamic counter-pressure of 1.7 to 2.3 bar.

6. A process as claimed in claim 1, characterized in that the starting material has a moisture content of more than 50%.

7. A process as claimed in claim 1, characterized in that the distance between the rotor and the stator of the scraped surface heat exchanger used for cooking/sterilization is 19 to 38 mm and is preferably of the order of 38 mm in the treatment of meat in the form of pieces.

8. A process as claimed in claim 1, characterized in that preheating, cooking/sterilization and cooling take place in scraped surface heat exchangers arranged in series.

9. A process as claimed in claim 1, characterized in that the meat or fish is separated from the cooking juice by pressing.

10. A process as claimed in claim 9 intended for the preparation of dehydrated meat, characterized in that the cooked meat is dried, the cooking juice is freed from fats, the fat-free juice is concentrated, the concentrated juice is incorporated in the meat and the fats are optionally sprayed onto the dried meat.

11. The use of the product obtained by the process claimed in any of claims 1 to 10 in culinary products or products for domestic animals.

12. The use of the product obtained by the process claimed in any of claims 1 to 9 for the preparation by enzymatic hydrolysis of a food intended for enteral feeding.